Europäisches Patentamt

(19) European Patent Office     (11) Publication number: **0 063 230**

Office européen des brevets     **B1**

(12)    EUROPEAN PATENT SPECIFICATION

(45) Date of publication of patent specification: **22.05.85**     (51) Int. Cl.⁴: **B 65 D 43/24,** B 65 D 43/16, F 25 D 23/02

(21) Application number: **82101722.5**

(22) Date of filing: **05.03.82**

(54) Balanced-opening cover for the tanks of ice-cream making machines, pasteurizers and the like.

(30) Priority: **14.04.81 IT 1514581 u**

(43) Date of publication of application:
**27.10.82 Bulletin 82/43**

(45) Publication of the grant of the patent:
**22.05.85 Bulletin 85/21**

(84) Designated Contracting States:
**AT BE CH DE FR GB LI LU NL SE**

(56) References cited:
**DE-A-2 306 526
DE-B-2 558 823
US-A- 871 561
US-A-1 740 965
US-A-2 797 840
US-A-3 064 847**

(73) Proprietor: **Carpigiani Bruto Macchine
Automatiche S.p.A.
45, Via Emilia
I-40011 Anzola Emilia, Bologna (IT)**

(72) Inventor: **Manfroni, Ezio
56, Via Altopiano
I-40037 Sasso Marconi-Bologna (IT)**

(74) Representative: **Porsia, Attilio
c/o Succ. Ing. Fischetti & Weber Via Caffaro 3
I-16124 Genova (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the covers for the tanks of pasteurizers, of ice-cream machines and similar machines.

In order to close the tanks of these machines, covers are required having the following characteristics:

a) a good thermal insulation,

b) inside visibility,

c) constructional simplicity to ensure good cleaning,

d) possibility of either partial or total balanced opening,

e) easy removability for washing with running water,

f) easy maneuverability with one hand by the operator.

From US—A—1 740 965 is known a balanced opening cover for a container, which is made of glass and is hinged to the top plane of a container by means of a pivot engaging in an arcuate groove formed in the lower side of the horizontal arm of a hinge member which is substantially shaped as an inverted L, the vertical arm of the hinge member being secured in a swingable and liftable manner to the top plane of the container by means of a suitable bolt, resilient means being provided to urge constantly the hinge member against the upper surface of the top plane.

However, in order to hold said cover in closed position, as well as in all opening positions, locking means are required, otherwise the cover would be easily detached from its hinge.

It is therefore the main object of the present invention to provide a cover for the specified machine, which will meet all the requirements above, and in which elastically pressed hinge members are provided, which assure the positive adhesion of the cover to the rim of the tank in its closure position, and permit to obtain a continuous passage (without the need of locking and unlocking of locking means) from the closure position to the fully opened position through any intermediate opening position, and vice versa, without any risk of disengagement of the cover from its hinge.

The cover may be detached only and when desired, in opposition to the action of the springs of the hinges.

According to the main characteristic of the invention, a balanced opening cover for tanks of ice-cream making machines, pasteurizers or the like is provided, hinged to the top plane (2) of the machine by means of a pivot (3) engaging in an arcuate groove (304) formed in the lower side of the horizontal arm (104) of a hinge member (4) which is substantially shaped as an inverted "L", the vertical arm (204) of said hinge member (4) being secured in a swingable and liftable manner to the top plane (2) of the machine by means of a suitable bolt (5), resilient means (6) being provided to urge constantly said hinge member (4) against the upper surface of the top plane (2), characterized by the fact that the said cover (1) is made of clear plastics; that the said pivot (3) protrudes endwise laterally outwards at both sides of the cover (1), the two ends of said pivot being each engaged in a said arcuate groove (304); that the said bolts (5) are screwed into suitable borings formed in the vertical arms (204) of the said hinge members (4), the shank of said bolts being passed freely through corresponding holes formed in the top plane (2) of the machine, the said resilient means (6) being interposed between the heads of said bolts (5) and the underface of said top plane (2); and that the said cover (1) is further provided at the hinge edge thereof with cam means (301, 501) cooperating with the upper surface of said top plane (2), so as to provide one or more balanced opening positions.

Advantageously, the said resilient means comprises suitable springs (6).

By virtue of this mounting on spring-urged hinges, the cover can be easily disengaged from the hinges by moving it, when in the completely open position, in such a direction as to resiliently disengage the pivots from said hinges.

Other characteristics and advantages of this invention will be more apparent from the following detailed description thereof, made with reference to the accompanying drawings, wherein:

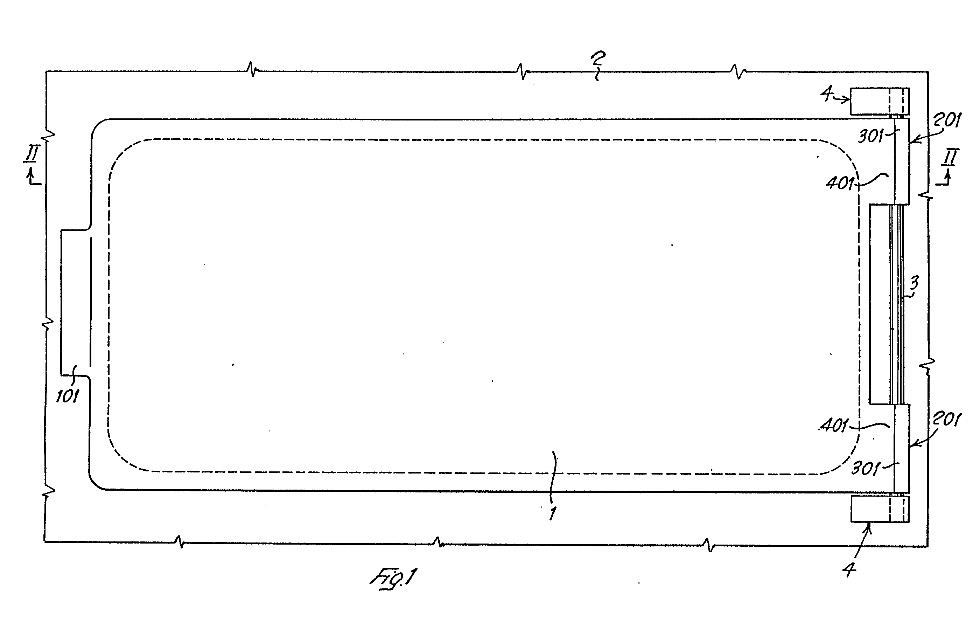

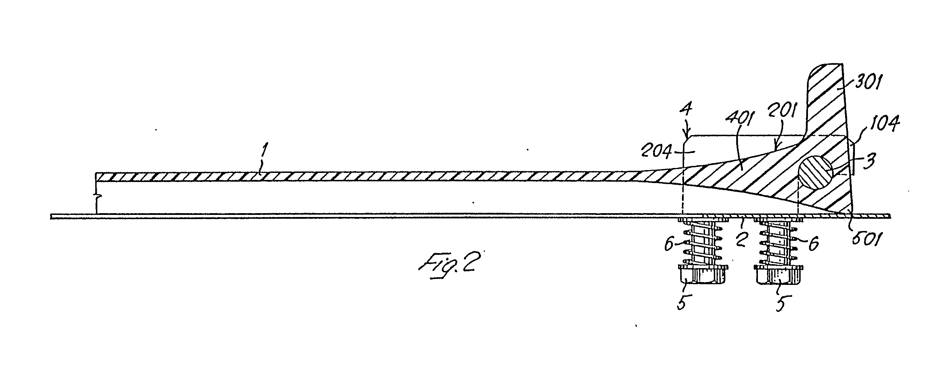

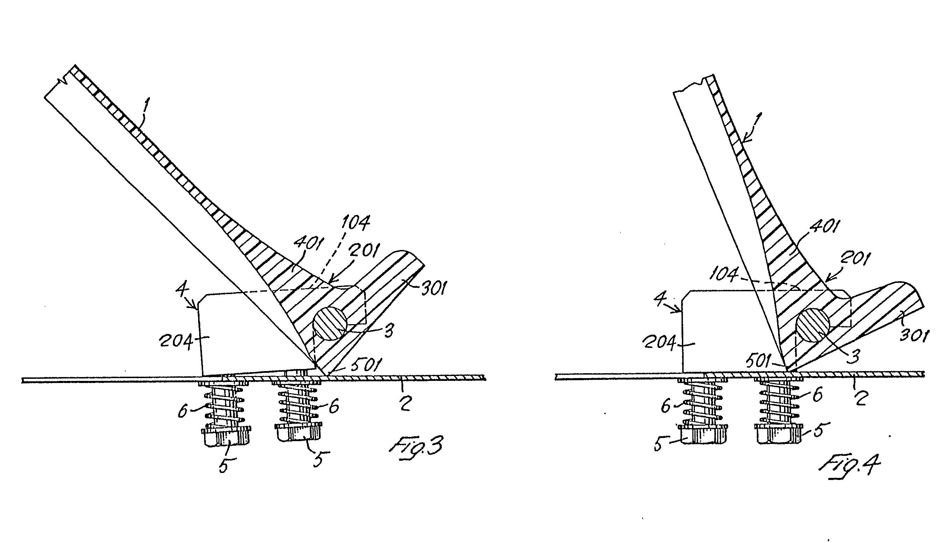

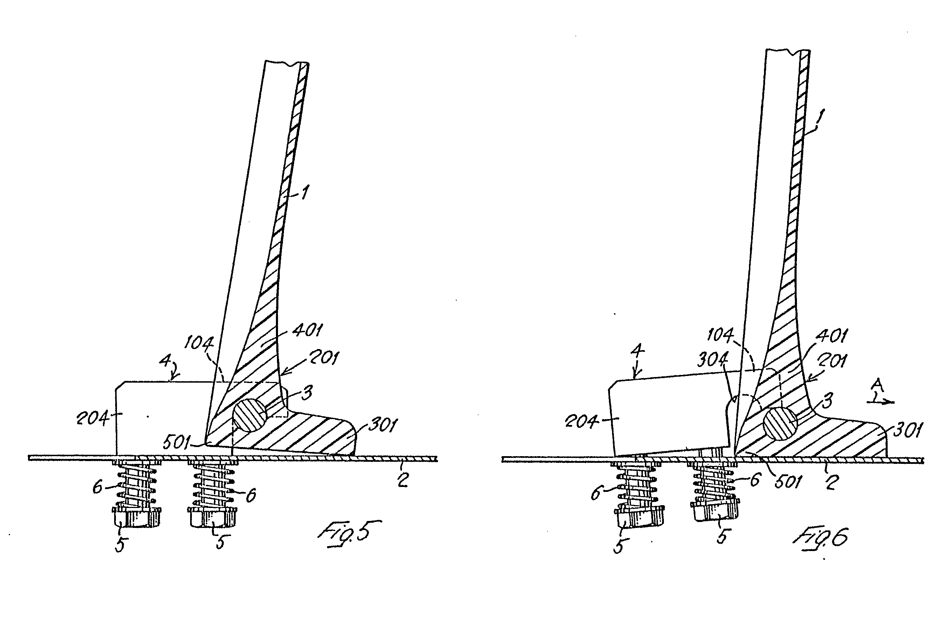

Figure 1 is a top plan view of the cover according to the invention, mounted on an ice-cream making machine, in the closed position; Figure 2 is a fragmentary longitudinal sectional view, on the line II—II of Figure 1; Figure 3 is a fragmentary longitudinal sectional view of the cover of Figure 2 during the lifting step, in a partially opened position, while passing through the dead center thereof; Figure 4 is a sectional view similar to Figure 3, with the cover in the position of stable partial opening; Figure 5 shows the said cover in the position of total opening; and Figure 6 shows the steps of disengagement of the cover from its hinges.

With reference to the drawings, the numeral 1 indicates the cover, made of clear plastics. One end of the cover 1 is provided with an operating handle 101, and the opposite end is provided with two lateral L-shaped projections 201 comprising a wing portion 401 merging with the plane portion of the cover, an edge corner 501 cooperating with the plane 2 at the top edge of the tank of the machine, and an end portion 301 extending upwards when the cover is in the closed position. Said projections 201 have each a longitudinal through hole accommodating a pivot shaft 3 so that the two end portions thereof will protrude beyond the outer sides of the wing portions 201. Two hinge members 4 are resiliently secured to the top plane 2 in registry with the end portions of the shaft 3. These hinge members are shaped as an inverted "L", and each of them is provided, in the lower side of the horizontal arm thereof, with a semi-circular groove 304 having a diameter corresponding to the diameter of the shaft 3. The vertical arm 204 of each hinge member 4 is secured to the plane 2 by means of bolts 5 that traverse suitable holes in the plane 2 and are screwed to said vertical arm of each hinge member 4. Arranged between the heads of the bolts 5 and the plane 2, are springs 6 whereby said hinge members are urged against the plane 2 and yet are permitted to move vertically against the action of the springs 6.

The operation of the device described above is now apparent.

During the opening step, when the edge corner 501 bears against the plane 2 (position shown in Figure 3), it causes the hinge members 4 to lift against the action of the springs 6, until said corner 501 has moved beyond the vertical passing through the shaft 3, and the hinge members have been moved back against the plane 2 by the springs 6 (position shown in Figure 4). In this position, the cover is partially opened and is firmly held thereat. By further continuing the opening movement, the cover will be brought to the position of total opening, wherein the free end of the wing portion 301 bears against the plane 2 (position shown in Figure 5). If the cover is to be removed, it is moved from this position in the direction of the arrow A in Figure 6 until the pivot shaft 3 has disengaged from the semi-circular grooves 304 of the hinge members 4 (position shown in Figure 6). If the cover is to be reengaged in place, it should be pushed merely against the hinge members 4 in the opposite direction.

Of course, this invention is not limited to the embodiment here shown and described, but it embraces all changes and modifications achieving the same advantages, and falling within the scope of the inventive principle, as defined by the attached claims.

**Claims**

1. A balanced-opening cover (1) for the tanks of ice-cream making machines, pasteurizers and the like, hinged to the top plane (2) of the machine by means of a pivot (3) engaging in an arcuate groove (304) formed in the lower side of the horizontal arm (104) of a hinge member (4) which is substantially shaped as an inverted "L", the vertical arms (204) of said hinge members (4) being secured in a swingable and liftable manner to the top plane (2) of the machine by means of suitable bolts (5), resilient means (6) being provided to urge constantly said hinge members (4) against the upper surface of the top plane (2), characterized by the fact that the said cover (1) is made of clear plastics; that the said pivot (3) protrudes endwise laterally outwards at both sides of the cover (1), the two ends of said pivot being each engaged in one of said arcuate grooves (304); that the said bolts (5) are screwed into suitable borings formed in the vertical arms (204) of the said hinge members (4), the shank of said bolts being passed freely through corresponding holes formed in the top plane (2) of the machine, the said resilient means (6) being interposed between the heads of said bolts (5) and the underface of said top plane (2); and that the said cover (1) is further provided at the hinge edge thereof with cam means (301, 501) cooperating with the upper surface of said top plane (2), so as to provide one or more balanced opening positions.

2. A cover according to claim 1, characterized by the fact that said resilient means comprises suitable springs (6).

**Patentansprüche**

1. In Offenstellung ausbalancierter Deckel (1) für Behälter von Speiseeiserzeugungsmaschinen, Pasteurisatoren und dergleichen, der an der Dekke (2) der Maschine mittels eines Gelenkbolzens (3) gelagert ist, welcher in eine bogenförmige Nut (304) in der unteren Seite des waagerechten Schenkels (104) eines im wesentlichen in Form eines umgekehrten "L" ausgebildeten Scharniergliedes (4) eingreift, wobei die senkrechten Schenkel (204) der Scharnierglieder (4) mittels geeigneter Bolzen (5) schwenkbar und hebbar an der Decke befestigt sind und elastische Mittel (6) vorgesehen sind, um die Scharnierglieder (4) ständig gegen die obere Fläche der Decke (2) zu ziehen, dadurch gekennzeichnet, daß der Deckel (1) aus durchsichtigem Kunststoff besteht; daß der Gelenkbolzen (3) mit seinen Enden auf beiden Seiten des Deckels (1) seitlich herausragt und jedes der beiden Enden des Gelenkbolzens in eine der bogenförmigen Nuten (304) eingreift; daß die Bolzen (5) in passende Bohrungen in den senkrechten Schenkeln (204) der Scharnierglieder (4) eingeschraubt sind, der Schaft der Bolzen sich frei durch entsprechende Löcher in der Decke (2) der Maschine erstreckt und die elastischen Mittel (6) zwischen den Köpfen der Bolzen (5) und der unteren Fläche der Decke (2) eingespannt sind; und daß der Deckel (1) aufseiten seines Schwenklagers mit Nocken (301, 501) versehen ist, welche mit der oberen Fläche der Decke (2) derart zusammenwirken, daß sich eine oder mehrere ausbalancierte Offenstellungen ergeben.

2. Deckel nach Anspruch 1, dadurch gekennzeichnet, daß die elastischen Glieder geeignete Federn (6) sind.

**Revendications**

1. Couvercle (1), à position d'ouverture équilibrée et destiné aux cuves de machines de fabrication de crème glacée, de pasteurisateurs et analogues, articulé au plan formant le sommet (2) de la machine au moyen d'une broche (3) engagée dans une gorge (304) arquée ménagée dans le côté inférieur du bras horizontal (104) d'un élément de charnière (4) sensiblement en forme de "L" inversé, les bras verticaux (204) de ces éléments de charnière (4) étant fixés, de manière à pouvoir basculer dans et à pouvoir se soulever par rapport au plan formant le sommet (2) de la machine au moyen de boulons (5) convenables, des moyens élastiques (6) étant prévus pour rappeler constamment ces éléments de charnière (4) contre la surface supérieure du plan formant le sommet (2), caractérisé en ce que ledit couvercle (1) est en matériau plastique translucide, en ce que ladite broche (3) fait saillie par ses extrémités latéralement à l'extérieur des deux côtés du couvercle (1), chacune des deux extrémités de ladite broche étant engagée dans l'une desdites gorges (304) arquées; en ce que lesdits boulons (5) sont vissés dans des taraudages convenables ménagés dans les bras verticaux (204) desdits éléments à charnière (4), la tige desdits boulons passant librement dans des trous correspondants ménagés dans le plan formant sommet (2) de la machine, lesdits moyens élastiques (6) étant interposés entre les têtes desdits boulons (5) et la face inférieure dudit plan formant sommet (2); et en ce que ledit couvercle (1) est muni en outre sur son bord d'articulation de parties saillantes (30, 501) coopérant avec la surface supérieure dudit plan formant sommet (2) de manière à donner une ou plusieurs positions d'ouverture équilibrées.

2. Couvercle suivant la revendication 1, caractérisé en ce que lesdits moyens élastiques comprennent des ressorts (6) convenables.

Fig.1

Fig. 2

0 063 230

Fig.3

Fig.4

Fig.5

Fig.6